# EUROPEAN PATENT SPECIFICATION

(11) **EP 1 518 838 B1**
(45) Date of publication and mention of the grant of the patent: **16.12.2009**
(21) Application number: 04022840.5
(22) Date of filing: 24.09.2004
(51) Int. Cl.: C03C 17/34, C03C 17/36, C03C 17/22, C03C 17/06, C03C 10/00

(54) **Glass article**
Glasartikel
Article en verre

(30) Priority: 24.09.2003 JP 2003331037; 10.08.2004 JP 2004233820
(43) Date of publication of application: 30.03.2005
(73) Proprietor: Nippon Electric Glass Co., Ltd., Otsu-shi, Shiga 520-8639 (JP)
(72) Inventor: Sawada, Masahiro, c/o Nippon Electric Glass Co.Ltd, Otsu-shi, Shiga (JP); Kanai, Toshimasa, c/o Nippon Electric Glass Co.Ltd, Otsu-shi, Shiga (JP); Imamura, Tsutomu, c/o Nippon Electric Glass Co.Ltd, Otsu-shi, Shiga (JP); Ishihara, Ukon, c/o Nippon Electric Glass Co.Ltd, Otsu-shi, Shiga (JP)
(74) Representative: Henkel, Feiler & Hänzel

(56) References cited:
- EP-A- 0 599 071
- EP-A- 1 026 129
- EP-A- 1 114 803
- FR-A- 2 744 116
- GB-A- 599 675
- GB-A- 606 914
- US-A- 4 525 462
- US-A- 4 900 630
- US-A1- 2003 113 550
- PATENT ABSTRACTS OF JAPAN vol. 009, no. 171 (C-291), 16 July 1985 (1985-07-16) -& JP 60 042253 A (ASAHI GLASS KK), 6 March 1985 (1985-03-06)
- PATENT ABSTRACTS OF JAPAN vol. 010, no. 028 (C-326), 4 February 1986 (1986-02-04) & JP 60 180935 A (ASAHI GLASS KK), 14 September 1985 (1985-09-14)
- PATENT ABSTRACTS OF JAPAN vol. 009, no. 074 (C-273), 3 April 1985 (1985-04-03) & JP 59 207856 A (ASAHI GLASS KK), 26 November 1984 (1984-11-26)

## Description

### FIELD OF THE INVENTION .

The present invention relates to a glass article to be used for observation windows of high-temperature furnaces such as garbage incinerators, cremation furnaces, metal fusing furnaces, glass fusing furnaces and heat-treating furnaces, through which the inside condition of the furnaces is observed.

### BACKGROUND OF THE INVENTION

Heretofore, observation windows are installed in high-temperature instruments such as stoves, so as to observe the inside condition of the instruments through them. In such the observation windows, transparent heat-resistant glass that is hardly broken by thermal shock even when exposed to high temperatures is used, for example, low-expansion crystallized glass (e.g., see Patent Documents 1 and 2), high silicate glass, borosilicate glass, quartz glass, etc.
[Patent Document 1] JP-A 4-214046
[Patent Document 2] JP-A 2000-247681

GB-A-606 914 discloses that a window for inspecting objects at high temperatures in a furnace or a kinematograph projection apparatus comprises a transparent base that will withstand a temperature of at least 400°C, having on one side a precious metal coating which reflects infra-red rays and transmits in the visual range, and on the other side a fired coating of a liquid lustre, applied to absorb ultraviolet rays. The base may be of fused silica, mica or borosilicate or other glass, and the precious metal may be applied to a thickness giving a visual transmission of from 1 to 3 per cent.

GB-A-599 675 discloses that an anti-glare, heat-reflecting light filter having a high reflectivity for infrared radiation and a high absorption for ultra-violet radiation combined with a transmittancy in at least part of the visible spectrum consists of a glass coated on one side with a uniform thin film of precious metal by applying, e.g. by spinning, to the surface of the glass a solution of at least one precious metal resinate or sulphoresinate in organic solvents, allowing the solvent to evaporate and then heating the glass at a temperature sufficient to decompose the metal compound or compounds and to burn away all organic matter. The coating solution may also contain one or more resinates of bismuth, tin, uranium, nickel, chromium or calcium so that the content of the oxide of such metals in the final metal film does not exceed by 10 per cent the weight of such precious metal, which may be gold, silver, platinum, rhodium or palladium or mixtures of these metals. A neutral light filter may be produced by coating a sheet of glass with a film of gold and palladium or gold and platinum in the manner described above.

US-A-4 900 630 discloses that a multilayer coating film is provided on one side of a transparent or semitransparent glass plate to afford a golden appearance to the coated glass plate at least when viewed from the uncoated side. Essentially the multilayer coating film is made up of a TiN layer adjacent to the glass plate surface and either a Ti layer or a Cr layer which overlies the TiN layer, and the coating film is formed such that the transmittance of the coated glass plate for visible light becomes not more than 40%. Optionally, the Ti or Cr layer is overlaid with either a TiO₂ film or a Cr₂O₃ film. Also optionally, either a TiO₂ film or a Cr₂O₃ film is interposed between the TiN layer and the glass plate surface. Each layer of the multilayer coating film can be formed by sputter deposition using a relatively simple method, and the multilayer coating has good durability.

JP-A-60-042 253 discloses that a metallic Ti film as the 1^{st} layer is formed on the surface of a glass substrate such as a soda lime glass plate, and a metallic Cr film as the 2^{nd} layer is further formed on the Ti layer to obtain heat-ray reflecting glass.

US-A-4 525 462 discloses a dark blue dyed furnace sight glass of soda-lime-silica further containing carbon and oxides of iron and cobalt with substantially no infrared transmission and which sight glass affords a view of details in the melting operation. Other ingredients may include K₂O, MgO, Al₂O₃ or ZrO₂.

EP-A-0 599 071 discloses that a base layer of indium/tin oxide (ITO layer) and, on top of the latter, a thin metal layer preferably of silver, are sputtered onto a glass substrate. As top layer a further layer of indium/tin oxide is sputtered onto the metal layer. This top layer reduces the reflection of the metal layer so that the considerable reduction in the electrical resistance of the layer pack which this metal layer causes need not be at the expense of a significant reduction in transmission.

EP-A-1 114 803 discloses that in an Li₂O-Al₂O3 -SiO₂ transparent crystallized glass, β-quartz solid solution is produced as main crystals, an average coefficient of linear thermal expansion within a range between 30 and 380°C is -10 - 10 x 10⁻⁷/°C, and β-OH in an amount of 0.28/mm or more is contained. Preferably, the content of each component of Li₂O, SiO₂, and Al₂O₃ satisfies, by weight ratio, the relationship given by 0.058 ≥ {Li₂O/(SiO₂ + Al₂O₃)} ≥ 0.031.

EP-A-1 026 129 discloses that in an Li₂O-Al₂O₃-SiO₂ transparent crystallized glass with β-quartz solid solution precipitated as main crystals, the Li⁺ concentration ratio at a position of 50 nm from the surface of the glass is equal to 0.80 or less where the Li⁺ concentration at a position of 2000 nm from the surface is supposed to be equal to 1.

### SUMMARY OF THE INVENTION

However, when the crystallized glass for observation window of stoves, disclosed in Patent Documents 1 and 2, is used as the material for observation window that are exposed to higher temperature than stoves, such as garbage incinerators, metal fusing furnaces, glass fusing furnaces and heat-treating furnaces, then it could not almost block out visible light and heat rays. Therefore, if operators try to observe the inside conditionof the furnaces through the observation windows without protectors such as light-shielding glasses or light-shielding plates, then they may be dazzled and hot. Another problem with them is that the heat in the furnaces goes out through the observation windows. Therefore, the thermal efficiency of the furnaces is poor.

If protectors such as light-shielding glasses or light-shielding plates are used when the inside condition of the furnaces is observed through the observation windows, then they may be effective for dazzling prevention but are not effective for heat insulation. In addition, using the light-shielding plates worsens the operators' working efficiency. These are still other problems with the observation windows of the type.

### SUMMARY OF THE INVENTION

An object of the invention is to provide a glass article that exhibits excellent anti-dazzling and heat-insulating effects when used for observation windows of high-temperature furnaces such as glass fusing furnaces, and therefore enables long-time observation of the inside of furnaces through the observation windows without protectors, and does not detract from the thermal efficiency of the furnaces.

We, the present inventors have found that, when a visible light-shielding layer having the ability to block out light and the ability to reflect heat rays is formed on the surface of transparent heat-resistant glass, and when the coated glass is used for observation windows of furnaces, then it prevents the transmission of visible light and heat rays through the observation windows and retards radiation heat through them. Therefore, the observation windows prevent from dazzle and hotness, and enable long-time observation of the inside of furnaces through them without protectors, and do not detract from the heat efficiency of furnaces. On the basis of these findings, we have proposed the present invention.

Specifically, the invention has the following constitution.
(1) An observation window of a high temperature furnace which comprises a transparent heat-resistant glass sheet and a visible light-shielding layer on the surface thereof, wherein an average visible light transmittance of the observation window at a wavelength of 380 - 780 nm is 0.03 - 15%; wherein an average infrared reflectance of the observation window at a wavelength of 1000 - 2500 nm is at least 50%, and wherein the visible light-shielding layer comprises a visible light-shielding film selected from the following (a) to (d):
   (a) one metal selected from the group consisting of Ti, Nb, Zr, Hf, Ni and Cr;
   (b) one metal nitride with a metal selected from the group consisting of Ti, Nb, Ag, Zr, Hf, Ni and Cr;
   (c) one alloy selected from the group consisting of TiAl, NiCr, stainless and hastelloy;
   (d) one alloy nitride with an alloy selected from the group consisting of TiAl, NiCr, stainless and hastelloy.
(2) The observation window according to item (1), wherein an average infrared transmittance of the observation window at a wavelength of 1000 - 2500 nm is 10% or less.
(3) The observation window according to item (1) or (2) wherein an average thermal expansion coefficient at 30 - 380°C of the transparent heat-resistant glass sheet is -20 to +50 x 10⁻⁷/°C.
(4) The observation window according to item (3), wherein the transparent heat-resistant glass sheet is any of transparent crystallized glass, high silicate glass, borosilicate glass or quartz glass.
(5) The observation window according to any one of items (1) to (4) wherein the visible light-shielding layer comprises a heat ray reflection film.
(6) The observation window according to item (5), wherein the heat ray reflection film is formed of one oxide selected from the group consisting of tin-doped indium oxide, fluorine-doped tin oxide, antimony-doped tin oxide, and aluminium-doped zinc oxide.
(7) The observation window according to item (5), which has at least a protective film adjacent to the visible light-shielding film or the heat ray reflection film thereof.
(8) The observation window according to item (7), wherein the protective film comprises at least one selected from the group consisting of SiO₂, Si₃N₄, AlN, SiAlNₓ and TiO₂.
(9) The observation window according to any one of items (1) to (8), which has at least an adhesive layer.
(10) The observation window according to item (7), wherein the heat-resistant glass sheet comprises, on the surface thereof, the visible light-shielding film and the protective film, in this order.
(11) The observation window according to item (7), wherein the heat-resistant glass sheet comprises, on the surface thereof, the heat ray reflection film, the protective film, and the visible light-shielding film, in this order.
(12) The observation window according to item (7), wherein the heat-resistant glass sheet comprises, on the surface thereof, the heat ray reflection film, the protective film, the visible light-shielding film, and the protective film, in this order.
(13) The observation window according to item (7), wherein the heat-resistant glass sheet comprises, on the surface thereof, the heat ray reflection film, the adhesive film, the protective film, the visible light-shielding film, and the protective film, in this order.
(14) The observation window according to item (7), wherein the heat-resistant glass sheet comprises, on the surface thereof, the visible light-shielding film and the protective film, in this order; and on the opposite surface thereof, the heat ray reflection film and the protective film, in this order.

The observation window of the invention has a visible light-shielding layer formed on the surface of a transparent heat-resistant glass sheet, and an average visible light transmittance of the observation window at a wavelength of 380 - 780 nm is 0.03 - 15 % (this corresponds to a scale number of 3 - 9 in JIS T-8141). Accordingly, when the observation windows are used for high-temperature furnaces, then operators can sufficiently observe the inside of the furnaces through them, not being dazzled even though they do not use protectors.

If the average visible light transmittance of the observation window at a wavelength of 380 - 780 nm is lower than 0.03 %, then the inside of furnaces could not be sufficiently observed because the observation window could not transmit enough visible light through it; but if larger than 15 %, then the observation window may transmit too much visible light through it. Therefore, operators feel dazzling, and, if so, it will be impossible to observe the inside of the furnaces without use of protectors.

Preferably, the average visible light transmittance of the observation window at a wavelength of 380 - 780 nm is 0.05 - 10 %, more preferably 0.1 - 8 %.

In addition, the average infrared (hereinafter, simply referred to as "IR") reflectance of the observation window at a wavelength of 1000 - 2500 nm is at least 50 %. Therefore, even when the inside of the furnaces is observed for a long period of time through the observation windows without using protectors, the heat ray transmittance through the observation windows is low and the radiation heat from the observation windows is retarded. Therefore, operators do not feel hot.

In addition, even when the area of the observation window is broadened, the heat loss through it is small. Therefore, the thermal efficiency of the furnaces is not lowered. If so, in addition, an additional electronic appliance such as a video camera may be installed at around the observation window, and the inside of furnaces could be observed in a control room.

Preferably, the average IR reflectance of the observation window at a wavelength of 1000 - 2500 nm is at least 55 %, more preferably at least 60 %.

### DETAILED DESCRIPTION OF THE INVENTION

When the average IR transmittance of the observation window of the invention at a wavelength of 1000 - 2500 nm is 10% or less, then the amount of the heat rays that can pass through the observation windows is small and therefore, the inside of furnaces can be readily observed through the observation windows even when no protectors are used.

This is because of the following reasons: When the amount of the heat rays that may pass through the observation window is smaller, then the total of the heat rays that are reflected by the observation window and absorbed by it is larger. The heat rays absorbed by the observation window can be radiated as radiation heat, but the radiation heat goes out from both surfaces of the observation window. Therefore, the quantity of heat that is radiated toward the observers from the inside of the furnaces through the observation window is the total of the transmitted heat rays and the radiation heat, and this may be relatively reduced.

Preferably, the average IR transmittance at a wavelength of 1000 - 2500 nm is 8% or less, more preferably at most 7% or less.

Also preferably, as the transparent heat-resistant glass sheet for the observation window of the invention has an average thermal expansion coefficient at 30 - 380°C of -20 to +50 × 10⁻⁷/°C, it is hardly broken by thermal shock. The transparent heat-resistant glass that has such an average thermal expansion coefficient falling within the range includes transparent crystallized glass such as typically LiO₂-A₂O₃-SiO₂ crystallized glass that comprises a β-quartz solid solution as the main crystal thereof; and low-expansion glass such as typically high silicate glass, borosilicate glass or quartz glass. In addition, high silicate glass contains SiO₂ more than 96 weight % like bycor® (manufactured by Corning Inc.).

In particular, the transparent LiO₂-Al₂O₃-SiO₂ crystallized glass that comprises a β-quartz solid solution as the main crystal thereof has an average thermal expansion coefficient at 30 - 380°C of -20 to +20 × 10⁻⁷/°C and is favorable, since it hardly softens and deforms even at high temperatures.

The visible light-shielding layer of the observation window of the invention comprises one visible light-shielding film selected from the following (a) - (d):
(a) one metal selected from the group consisting of Ti, Nb, Zr, Hf, Ni and Cr;
(b) one metal nitride with a metal selected from the group consisting of Ti, Nb, Ag, Zr, Hf, Ni and Cr;
(c) one alloy selected from the group consisting of TiAl, NiCr, stainless and hastelloy;
(d) one alloy nitride with an alloy selected from the group consisting of TiAl, NiCr, stainless and hastelloy.

The observation window of the type is preferred as its ability of visible light-shielding and ability of heat insulation are good. In particular, the visible light-shielding film of Ti or Ti nitride is preferred as it is easy to form the film.

Among the above (a), Ti, Nb, Ni and Cr are more preferred because it is easy to form their film. In particular, Ti is especially preferred.

Among the above (b), Ti nitride (TiN) is more preferred because it is easy to form its film.

Among the above (c), TiAl is more preferred because it is easy to form its film.

Among the above (d),TiAl nitride is more preferred because it is easy to form its film.

Moreover, among (a), (b), (c) and (d), even (a) is more preferred because it is easy to form its film.

Also preferably, the visible light-shielding layer of the observation window of the invention furthermore comprises a heat ray reflection film of the following (e):
(e) one oxide selected from the group.consisting of tin-doped indium oxide (ITO), fluorine-doped tin oxide, antimony-doped tin oxide, and aluminium-doped zinc oxide.

The observation window of of the type is preferred as its ability of visible light-shielding and ability of heat insulation are good.

Among the above (e), ITO is more preferred as its formation is easy and its ability of heat ray reflection is good.

In the above-mentioned visible light-shielding films, (a) - (d) have good ability of visible light-shielding and good ability of heat insulation. Therefore, they may exhibit good ability of heat insulation even in the absence of the additional heat ray reflection film such as (e). They may exhibit better ability of heat insulation when combined with the additional heat reflection film (e) as multi-layered film.

Preferably, the observation window of the invention has at least a protective film adjacent to the visible light-shielding film or the heat ray reflection film thereof.

Moreover, the protective film preferably comprises at least one selected from the group consisting of SiO₂, Si₃N₄, AlN, SiAlNₓ and TiO₂.

In this, the visible light-shielding layer may have additional ability of heat resistance, abrasion resistance and oxidation resistance.

For the protective film, SiO₂ and Si₃N₄ are more preferred as they are excellent in the point of the chemical durability, the film hardness and the dense structure thereof.

The observation window of the invention may have at least an adhesive layer formed therein for preventing delamination of the constitutive layers. Titanium oxide, zirconium oxide, alumina and the like may be used for the adhesive layer. In particular, it is desirable that the adhesive layer is formed between the heat ray reflection film and the protective film since the adhesion between the two is often poor.

Titanium oxide is especially preferred for the adhesive film, because it is easy to form it.

The preferable embodiments of the present invention are indicated below, but the invention is not limited thereto.

The first embodiment of the observation window of the invention comprises the first layer of a visible light-shielding film having 30 - 500 nm thick and the second layer of a protective film having 50 - 400 nm thick, on the surface of transparent heat-resistant glass, in this order. The visible light-shielding film in this case may be a film of any of the above-mentioned (a) - (d) and the protective film may be a film of any of SiO₂, Si₃N₄, AlN, SiAlNₓ or TiO₂.

The second embodiment of the observation window of the invention comprises the first layer of a heat ray reflection film having 30 - 500 nm thick, the second layer of a protective film having 50 - 400 nm thick and the third layer of a visible light-shielding film having 30 - 500 nm thick, on the surface of transparent heat-resistant glass, in this order.

The third embodiment of the observation window of the invention comprises the first layer of a heat ray reflection film having 30 - 500 nm thick, the second layer of a protective film having 50 - 400 nm thick, the third layer of a visible light-shielding film having 30 - 500 nm thick and the fourth layer of a protective film having 50 - 400 nm thick, on the surface of transparent heat-resistant glass, in this order.

The second layer, the protective film in the second and the third embodiments acts to prevent the reaction between the first layer, the heat ray reflection film and the third layer, the visible light-shielding film.

The fourth embodiment of the observation window of the invention comprises the first layer of a heat ray reflection film having 30 - 500 nm thick, the second layer of an adhesive film having 5 - 30 nm thick, the third layer of a protective film having 50 - 400 nm thick, the fourth layer of a visible light-shielding film having 30 - 500 nm thick and the fifth layer of a protective film having 50 - 400 nm thick, on the surface of transparent heat-resistant glass, in this order.

The fifth embodiment of the observation window of the invention comprises the first layer of a visible light-shielding film having 30 - 500 nm thick and the second layer of a protective film having 50 - 400 nm thick, formed in that order on the surface of transparent heat-resistant glass, and has the first layer of a heat ray reflection film having 30 - 500 nm thick and the second layer of a protective film having 50 - 400 nm thick, formed in that order on the opposite surface of the transparent heat-resistant glass.

The heat ray reflection film in the second - the fourth embodiments is the film (e) of any of tin-doped indium oxide, fluorine-doped tin oxide, antimony-doped tin oxide, and aluminium-doped zinc oxide; the protective film is a film of any of SiO₂, Si₃N₄, AlN, SiAlNₓ or TiO₂; and the visible light-shielding film may be a film of any of the above-mentioned (a) - (d).

In the observation window of the invention, the visible light-shielding layer may be formed by sputtering, vapor deposition or ion plating. In particular, sputtering is preferred as it enables to form a dense film which has good abrasion resistance.

When the observation window of the invention is used for glass fusing furnaces that are exposed to high temperature and when the observation window comprising it is provided with a metal shutter to cover it, then the observation window is not exposed to heat rays while the observation window is not in service. Therefore, the temperature of the observation window is prevented from being elevated.

Accordingly, the visible light-shielding layer is prevented from deterioration and the observation window is prevented from being deformed and broken by heat, and in addition, heat radiation through the observation window can be retarded and therefore the thermal efficiency of the furnace is hardly lowered. These are the advantages of the observation window of the invention.

When the observation window is further provided with an air-cooling device, in addition to the metal shutter installed thereto, then the temperature of the observation window is more hardly elevated and therefore it is more preferable since the visible light-shielding layer is more effectively prevented from deterioration and the observation window is also more effectively prevented from being deformed and broken by heat.

When the observation window of the invention is used for glass fusing furnaces that are exposed to high temperature and when it has a heat ray reflection film formed in such a manner that it is more inside the furnace than the visible light-shielding layer thereof, then the observation window maymore effectively reflect heat rays and is therefore favorable since it is hardly heated and hardly transmits heat rays.

When the observation window has the visible light-shielding layer formed on one surface of the transparent heat-resistant glass sheet and when the layer does not directly face furnaces, then it is favorable since the visible light-shielding layer is not exposed to corrosive gas contained in combustion gas and is therefore hardly deteriorated.

### EXAMPLES

The observation window of the invention is described in detail with reference to the following Examples but the present invention is not limited to these Examples.

Table 1 shows Examples of the invention (Examples 1 - (5); and Table 2 shows Comparative Examples (Comparative Examples 1 and 2).

**Table 1**

| | | **Example 1** | **Example 2** | **Example 3** | **Example 4** | **Example 5** |
|---|---|---|---|---|---|---|
| Constitution | 5th layer (thickness, (nm)) | - | - | - | Si₃N₄(100) | - |
| | 4th layer (thickness, (nm)) | - | Si₃N₄ (150) | Si₃N₄(100) | Ti (67) | - |
| | 3rd layer (thickness, (nm)) | - | Ti (87) | Ti (67) | SiO₂ (100) | - |
| | 2nd layer (thickness, (nm)) | Si₃N₄ (150) | SiO₂ (100) | SiO₂ (100) | TiO₂ (10) | Si₃Nₐ (150) |
| | 1st layer (thickness, (nm)) | Ti (87) | ITO (450) | ITO (450) | ITO (450) | Ti (87) |
| | Glass | transparent crystallized glass | transparent crystallized glass | transparent crystallized glass | transparent crystallized glass | transparent crystallized glass |
| | 1 st layer (thickness, (nm)) | - | - | - | - | ITO (450) |
| | 2nd layer (thickness, (nm)) | - | - | - | - | SiO₂ (100) |
| average visible light transmittance (%) | | 0.3 | 0.3 | 3.4 | 3.4 | 0.2 |
| average reflectance at a wavelength of 1000-2500 nm (%) | | 55 | 72 | 72 | 72 | 76 |
| average transmittance at a wavelength of 1000-2500 nm (%) | | 4.5 | 0.1 | 0.1 | 0.1 | 0.1 |
| ability of visible light-shielding | | ○ | ○ | ○ | ○ | ○ |
| visibility | | ○ | ○ | ○ | ○ | ○ |
| heat insulation | | ○ | ○ | ○ | ○ | ○ |
| heat resistance | | ○ | ○ | ○ | ○ | ○ |
| outward appearance | | gold | gold | bluish silver | bluish silver | gold |

**Table 2**

| | Comparative Example 1 | Comparative Example 2 |
|---|---|---|
| Glass | color glass | transparent crystallized glass |
| average visible light transmittance (%) | 1.8 | 89 |
| average reflectance at a wavelength of 1000-2500 nm (%) | 4 | 7 |
| average transmittance at a wavelength of 1000 - 2500 nm (%) | 0.8 | 87 |
| ability of visible light-shielding | O | × |
| Visibility | O | × |
| heat insulation | - | × |
| heat resistance | × | O |

### Examples 1 to 5

In Examples 1- 5, films were formed on a transparent crystallized glass having 5mm thick (N-0: manufactured by Nippon Electric Glass Co., Ltd), by sputtering to form observation window. The order of the film formation and the thickness of each film formed are as in Table 1. The transparent crystallized glass used is LiO₂-Al₂O₃-SiO₂ crystallized glass that comprises β-quartz solid solution as the main crystal thereof, and its average thermal expansion coefficient at 30 - 380°C was -5 × 10⁻⁷/°C.

### Comparative Example 1

In Comparative Example 1, an eye protector lens having a scale number of 5 as determined according to JIS T-8141 (SOLIDA#5: manufactured by Riken Optic) was used. This is formed of color glass and has 2.2 mm thick.

### Comparative Example 2

In Comparative Example 2, no films were formed on the transparent crystallized glass (N-0: manufactured by Nippon Electric Glass Co., Ltd) used in Examples.

The average visible light transmittance was determined in accordance with JIS R-3106.

The average reflectance at a wavelength of 1000 - 2500 nm and the average transmittance at a wavelength of 1000 - 2500 nm were determined at regular intervals of 2 nm by the use of a spectrophotometer (UV3100PC: manufactured by Shimadzu Corporation), and the data were averaged. The visible light transmittance, the reflectance and the transmittance were measured on the side of the glass surface in Examples 1-4, and on the SiO₂ film side in Example 5.

The ability of visible light-shielding was evaluated as follows: The observation window having a size of 150 × 150 cm was installed into an observation window frame formed of calcium silicate plate in an electric furnace, and the electric furnace was heated at 1000°C.

In that condition, the inside of the electric furnace was observed with the naked eye through the observation window, at a site spaced from the glass article by 25 cm. When the operator was not dazzled, then the sample is good "O"; but when the operator was dazzled, then the sample is not good "×"_{.}

The visibility was evaluated as follows. The observation window was set in the same manner as in the ability of visible light-shielding test as above, and the inside of the electric furnace was observed with the naked eye through the observation window, at a site spaced from the observation window by 25 cm. When the operator could readily confirm the inside of the furnace, then the sample is good "O"; but when the operator could not readily confirm it, then the sample is not good "×".

The heat insulation was evaluated as follows. The observation window was set in the same manner as in the ability of visible light-shielding test as above, and the inside of the electric furnace was observed with the naked eye through the observation window, at a site spaced from the observation window by 25 cm. When the operator did not feel hot, then the sample is good "O"; but when the operator felt hot, then the sample is not good "×".

In these tests, the samples of Examples 1-4 were set that their glass surface could face inside the furnace. And the sample of Example 5 was set that its SiO₂ film side could face inside the furnace. However, the method did not apply to Comparative Example 1, in which the inside of the electric furnace heated at 1000°C was directly observed via the eye protector (SOLIDA#5).

The heat resistance was evaluated as follows. The observation window having a size of 40 × 20 mm was kept in an electric furnace previously heated at 250°C, for 1 week. When the sample was neither broken nor delaminated, then it is good "O"; but when the sample was broken or delaminated, then it is not good "×".

The outward appearance was evaluated by observing the samples with the naked eye.

As it is apparent from Table 1, the samples of Examples 1 - 5 are all good in the point of the ability of visible light-shielding, the visibility, the heat insulation and the heat resistance.

As opposed to these, the sample of Comparative Example 1 is good in the point of the ability of visible light-shielding but is not good in the point of the heat resistance since it was broken immediately after put into the electric furnace; and the sample of Comparative Example 2 had neither ability of visible light-shielding nor ability of heat insulation, as in Table 2.

### INDUSTRIAL APPLICABILITY

As in the above, the observation window of the invention has a visible light-shielding layer formed on transparent heat-resistant glass, and the layer has the ability of visible light-shielding and the ability of heat ray reflection. Therefore, the observation window prevents visible light and heat ray transmission through it, and is favorable for observation windows of garbage incinerators, cremation furnaces, metal fusing furnaces, glass fusing furnaces, heat treating furnaces and other furnaces that are exposed to high temperature.

While the invention has been described in detail and with reference to specific embodiments thereof, it will be apparent to one skilled in the art that various changes and modifications can be made therein without departing from the spirit and scope thereof.

## Claims

1. An observation window of a high temperature furnace which comprises a transparent heat-resistant glass sheet and a visible light-shielding layer on the surface thereof,
wherein an average visible light transmittance of the observation window at a wavelength of 380 - 780 nm is 0.03 - 15%; wherein an average infrared reflectance of the observation window at a wavelength of 1000 - 2500 nm is at least 50%, and wherein the visible light-shielding layer comprises a visible light-shielding film selected from the following (a) to (d):
(a) one metal selected from the group consisting of Ti, Nb, Zr, Hf, Ni and Cr;
(b) one metal nitride with a metal selected from the group consisting of Ti, Nb, Ag, Zr, Hf, Ni and Cr;
(c) one alloy selected from the group consisting of TiAl, NiCr, stainless steel and hastelloy;
(d) one alloy nitride with an alloy selected from the group consisting of TiAl, NiCr, stainless steel and hastelloy.

2. The observation window according to claim 1, wherein an average infrared transmittance of the observation window at a wavelength of 1000 - 2500 nm is 10% or less.

3. The observation window according to claim 1 or 2, wherein an average thermal expansion coefficient at 30 - 380°C of the transparent heat-resistant glass sheet is -20 to +50 x 10⁻⁷/°C.

4. The observation window according to claim 3, wherein the transparent heat-resistant glass sheet is any of transparent crystallized glass, high silicate glass, borosilicate glass or quartz glass.

5. The observation window according to any one of claims 1to 4, wherein the visible light-shielding layer comprises a heat ray reflection film.

6. The observation window according to claim 5, wherein the heat ray reflection film is formed of one oxide selected from the group consisting of tin-doped indium oxide, fluorine-doped tin oxide, antimony-doped tin oxide, and aluminium-doped zinc oxide.

7. The observation window according to claim 5, which has at least a protective film adjacent to the visible light-shielding film or the heat ray reflection film thereof.

8. The observation window according to claim 7, wherein the protective film comprises at least one selected from the group consisting of SiO₂, Si₃N₄, AlN, SiAlNₓ and TiO₂.

9. The observation window according to any one of claims 1 to 8, which has at least an adhesive layer.

10. The observation window according to claim 7, wherein the heat-resistant glass sheet comprises, on the surface thereof, the visible light-shielding film and the protective film, in this order.

11. The observation window according to claim 7, wherein the heat-resistant glass sheet comprises, on the surface thereof, the heat ray reflection film, the protective film, and the visible light-shielding film, in this order.

12. The observation window according to claim 7, wherein the heat-resistant glass sheet comprises, on the surface thereof, the heat ray reflection film, the protective film, the visible light-shielding film, and the protective film, in this order.

13. The observation window according to claim 9, wherein the heat-resistant glass sheet comprises, on the surface thereof, the heat ray reflection film, the adhesive film, the protective film, the visible light-shielding film, and the protective film, in this order.

14. The observation window according to claim 7, wherein the heat-resistant glass sheet comprises, on the surface thereof, the visible light-shielding film and the protective film, in this order; and on the opposite surface thereof, the heat ray reflection film and the protective film, in this order.

## Patentansprüche

1. Beobachtungsfenster eines Hochtemperaturofens, das eine transparente wärmebeständige Glasplatte und eine sichtbares Licht abschirmende Schicht auf der Oberfläche derselben umfasst,
wobei der mittlere Transmissionsgrad für sichtbares Licht des Beobachtungsfensters bei einer Wellenlänge von 380 - 780 nm 0,03 - 15 % beträgt; wobei der mittlere Infrarotreflexionsgrad des Beobachtungsfensters bei einer Wellenlänge von 1000 - 2500 nm mindestens 50 % beträgt und
wobei die sichtbares Licht abschirmende Schicht einen sichtbares Licht abschirmenden Film umfasst, der aus den folgenden (a) bis (d) ausgewählt ist:
(a) ein Metall, das aus der Gruppe von Ti, Nb, Zr, Hf, Ni und Cr ausgewählt ist;
(b) ein Metallnitrid mit einem Metall, das aus der Gruppe von Ti, Nb, Ag, Zr, Hf, Ni und Cr ausgewählt ist;
(c) eine Legierung, die aus der Gruppe von TiAl, NiCr, nichtrostendem Stahl und Hastelloy ausgewählt ist;
(d) ein Legierungsnitrid mit einer Legierung, die aus der Gruppe von TiAl, NiCr, nichtrostendem Stahl und Hastelloy ausgewählt ist.

2. Beobachtungsfenster nach Anspruch 1, wobei der mittlere Infrarottransmissionsgrad des Beobachtungsfensters bei einer Wellenlänge von 1000 - 2500 nm 10 % oder weniger beträgt.

3. Beobachtungsfenster nach Anspruch 1 oder 2, wobei der mittlere Wärmeausdehnungskoeffizient der transparenten wärmebeständigen Glasplatte bei 30 - 380 °C -20 bis +50 x 10⁻⁷ / °C beträgt.

4. Beobachtungsfenster nach Anspruch 3, wobei die transparente wärmebeständige Glasplatte eine aus transparentem kristallisiertem Glas, Hochsilicatglas, Borosilicatglas oder Quarzglas ist.

5. Beobachtungsfenster nach einem der Ansprüche 1 bis 4, wobei die sichtbares Licht abschirmende Schicht einen Wärmestrahlungsreflexionsfilm umfasst.

6. Beobachtungsfenster nach Anspruch 5, wobei der Wärmestrahlungsreflexionsfilm aus einem Oxid gebildet ist, das aus der Gruppe von zinndotiertem Indiumoxid, fluordotiertem Zinnoxid, antimondotiertem Zinnoxid und aluminiumdotiertem Zinkoxid ausgewählt ist.

7. Beobachtungsfenster nach Anspruch 5, das mindestens einen Schutzfilm angrenzend an den sichtbares Licht abschirmenden Film oder den Wärmestrahlungsreflexionsfilm desselben aufweist.

8. Beobachtungsfenster nach Anspruch 7, wobei der Schutzfilm mindestens eine Komponente umfasst, die aus der Gruppe von SiO₂, Si₃N₄, AlN, SiAlNₓ und TiO₂ ausgewählt ist.

9. Beobachtungsfenster nach einem der Ansprüche 1 bis 8, das mindestens eine Klebeschicht aufweist.

10. Beobachtungsfenster nach Anspruch 7, wobei die wärmebeständige Glasplatte auf der Oberfläche derselben den sichtbares Licht abschirmenden Film und den Schutzfilm in dieser Reihenfolge umfasst.

11. Beobachtungsfenster nach Anspruch 7, wobei die wärmebeständige Glasplatte auf der Oberfläche derselben den Wärmestrahlungsreflexionsfilm, den Schutzfilm und den sichtbares Licht abschirmenden Film in dieser Reihenfolge umfasst.

12. Beobachtungsfenster nach Anspruch 7, wobei die wärmebeständige Glasplatte auf der Oberfläche derselben den Wärmestrahlungsreflexionsfilm, den Schutzfilm, den sichtbares Licht abschirmenden Film und den Schutzfilm in dieser Reihenfolge umfasst.

13. Beobachtungsfenster nach Anspruch 9, wobei die wärmebeständige Glasplatte auf der Oberfläche derselben den Wärmestrahlungsreflexionsfilm, den Klebefilm, den Schutzfilm, den sichtbares Licht abschirmenden Film und den Schutzfilm in dieser Reihenfolge umfasst.

14. Beobachtungsfenster nach Anspruch 7, wobei die wärmebeständige Glasplatte auf der Oberfläche derselben den sichtbares Licht abschirmenden Film und den Schutzfilm in dieser Reihenfolge und auf der entgegengesetzten Oberfläche derselben den Wärmestrahlungsreflexionsfilm und den Schutzfilm in dieser Reihenfolge umfasst.

## Revendications

1. Fenêtre d'observation d'un four à haute température qui comprend une feuille de verre résistante à la chaleur transparente et une couche formant écran à la lumière visible sur sa surface, où un facteur de transmission de la lumière visible moyen de la fenêtre d'observation à une longueur d'onde de 380-780 nm est 0,03-15 % ; où un facteur de réflexion infrarouge moyen de la fenêtre d'observation à une longueur d'onde de 1 000-2 500 nm est d'au moins 50 %, et où la couche formant écran à la lumière visible comprend un film formant écran à la lumière visible choisi parmi les (a) à (d) suivants :
(a) un métal choisi dans le groupe consistant en Ti, Nb, Zr, Hf, Ni et Cr ;
(b) un nitrure métallique avec un métal choisi dans le groupe consistant en Ti, Nb, Ag, Zr, Hf, Ni et Cr ;
(c) un alliage choisi dans le groupe consistant en TiAl, NiCr, l'acier inoxydable et l'hastelloy ;
(d) un nitrure d'alliage avec un alliage choisi dans le groupe consistant en TiAl, NiCr, l'acier inoxydable et l'hastelloy.

2. Fenêtre d'observation selon la revendication 1 où un facteur de transmission infrarouge moyen de la fenêtre d'observation à une longueur d'onde de 1 000-2 500 nm est 10 % ou moins.

3. Fenêtre d'observation selon la revendication 1 ou 2 où un coefficient de dilatation thermique moyen à 30-380°C de la feuille de verre résistante à la chaleur transparente est -20 à +50 x 10⁻⁷/°C.

4. Fenêtre d'observation selon la revendication 3 où la feuille de verre résistante à la chaleur transparente est l'un quelconque d'un verre cristallisé transparent, d'un verre à haute teneur en silicate, d'un verre de borosilicate et d'un verre de quartz.

5. Fenêtre d'observation selon l'une quelconque des revendications 1 à 4 où la couche formant écran à la lumière visible comprend un film de réflexion des rayons thermiques.

6. Fenêtre d'observation selon la revendication 5 où le film de réflexion des rayons thermiques est formé d'un oxyde choisi dans le groupe consistant en l'oxyde d'indium dopé à l'étain, l'oxyde d'étain dopé au fluor, l'oxyde d'étain dopé à l'antimoine et l'oxyde de zinc dopé à l'aluminium.

7. Fenêtre d'observation selon la revendication 5 qui a au moins un film protecteur adjacent à son film formant écran à la lumière visible ou à son film de réflexion des rayons thermiques.

8. Fenêtre d'observation selon la revendication 7 où le film protecteur comprend au moins l'un choisi dans le groupe consistant en SiO₂, Si₃N₄, AIN, SiAlNₓ et TiO₂.

9. Fenêtre d'observation selon l'une quelconque des revendications 1 à 8 qui a au moins une couche adhésive.

10. Fenêtre d'observation selon la revendication 7 où la feuille de verre résistante à la chaleur comprend, sur sa surface, le film formant écran à la lumière visible et le film protecteur, dans cet ordre.

11. Fenêtre d'observation selon la revendication 7 où la feuille de verre résistante à la chaleur comprend, sur sa surface, le film de réflexion des rayons thermiques, le film protecteur et le film formant écran à la lumière visible, dans cet ordre.

12. Fenêtre d'observation selon la revendication 7 où la feuille de verre résistante à la chaleur comprend, sur sa surface, le film de réflexion des rayons thermiques, le film protecteur, le film formant écran à la lumière visible et le film protecteur, dans cet ordre.

13. Fenêtre d'observation selon la revendication 9 où la feuille de verre résistante à la chaleur comprend, sur sa surface, le film de réflexion des rayons thermiques, le film adhésif, le film protecteur, le film formant écran à la lumière visible et le film protecteur, dans cet ordre.

14. Fenêtre d'observation selon la revendication 7 où la feuille de verre résistante à la chaleur comprend, sur sa surface, le film formant écran à la lumière visible et le film protecteur, dans cet ordre ; et sur sa surface opposée, le film de réflexion des rayons thermiques et le film protecteur, dans cet ordre.
